## Europäisches Patentamt
## European Patent Office
## Office européen des brevets

(19)

(11) Veröffentlichungsnummer: **0 158 840**
**B1**

(12) # EUROPÄISCHE PATENTSCHRIFT

(45) Veröffentlichungstag der Patentschrift:
25.11.87

(21) Anmeldenummer: 85103035.3

(22) Anmeldetag: 15.03.85

(51) Int. Cl.⁴: **C 03 C 1/02,** C 03 B 20/00,
C 03 B 5/08, C 03 B 5/12

(54) Verfahren zur Herstellung eines zur Erzeugung von reinem Quarzglas geeigneten Produktes, sowie Verfahren zur Erzeugung reinem Quarzglases aus diesem Produkt und Verwendung dieses Produktes für die Züchtung von Piezokristallen.

(30) Priorität: 20.03.84 DE 3410200

(43) Veröffentlichungstag der Anmeldung:
23.10.85 Patentblatt 85/43

(45) Bekanntmachung des Hinweises auf die Patenterteilung:
25.11.87 Patentblatt 87/48

(84) Benannte Vertragsstaaten:
AT BE CH DE FR GB IT LI LU NL SE

(56) Entgegenhaltungen:
GB-A-968 673

SILIKATTECHNIK, Band 29, Nr. 4, April 1978, Seiten 104-105; F. WEIHRAUCH u.a.: "Schadstoffarme SiO2-Träger aus Quarzkiesen"
CHEMICAL ABSTRACTS, Band 93, Nr. 8, August 1980, Seite 401, Nr. 78231r, Columbus, Ohio, US
CHEMICAL ABSTRACTS, Band 99, Nr. 22, 28. November 1983, Seite 280, Nr. 180361u, Columbus, Ohio, US; V.I. KELEINIKOV u.a.: "Technology of the preparation of nondarkening quartz glass"

(73) Patentinhaber: Sacher, Leo K., Dr., Kurpfalz Strasse 71, D-6920 Sinsheim (DE)

(72) Erfinder: Lindemann, Gerhard, Dr., Clausiusstrasse 40, D-6450 Hanau (DE)

(74) Vertreter: Betzler, Eduard, Dipl.- Phys., Postfach 70 02 09 Plinganserstrasse 18a, D-8000 München 70 (DE)

EP 0 158 840 B1

## Beschreibung

Die Erfindung beschäftigt sich mit der Herstellung von reinem Quarzglas und richtet sich insbesondere auf die Herstellung eines zur Erzeugung solchen reinen Quarzglases geeigneten Produktes aus Quarzsorten, die bis jetzt als zur Herstellung reinen Quarzglases für ungeeignet befunden wurden. Ferner betrifft die Erfindung die Verwendung des aus solchen Quarzsorten gemäß der Erfindung gewonnenen Produktes für die Züchtung von Piezokristallen.

Seit Beginn der industriellen Verarbeitung von Quarz zu Quarzglas (Kieselglas) etwa um die Jahrhundertwende werden für diesen Zweck Rohquarze verwendet, die aus den unterschiedlichen Lagerstätten allein unter dem Gesichtspunkt ausgewählt wurden, daß sie mehr oder weniger wasserklar, zumindest aber transparent waren.

Die aus diesem Rohmaterial erschmolzenen Quarzgläser waren, zum Teil auch durch unterschiedliche Verfahrensführung bedingt, mehr oder weniger wasserklar, bzw. wenigsten stransparent.

Durch Verbesserung der Schmelz- und Verarbeitungstechnik konnten Transparenz und optisches Verhalten durch z. B. Minimierung des Blasengehaltes, homogenisieren und ähnliches auch von solchen Quarzgläsern, die aus nicht völlig wasserklaren, sondern nur transparenten Rohquarzen erschmolzen worden waren, an die Eigenschaften von Quarzgläsern angeglichen werden, die wasserklaren Rohquarzen erschmolzen worden sind.

Die Suche nach einer Verbesserung der Verfahrenstechniken wurde im zunehmenden Maße notwendig, weil die Reserven an wasserklaren Rohquarz nicht ausreichen, um den wachsenden Bedarf zu decken.

Bei den bekannten Verfahren zum Erschmelzen von Quarzglas wird der gewonnene wenigstens transparente Rohrquarz in Stücke von bis zu ca. 100 g gebrochen und über den Alpha-Beta-Umwandlungspunkt des Quarzes von 573° C erhitzt und sodann in weichem oder entsalztem oder deionisiertem Wasser abgeschreckt.

Das so erhaltene hochreine Produkt wird sodann in einer Achat-Mühle oder mittels ähnlich abriebunproblematischer Mahlwerkzeuge auf eine Körnung unter ca. 1 mm heruntergemahlen, gesiebt, fraktioniert und gegebenenfalls mechanisch und/oder chemisch nachgereinigt, um bestimmte Oberflächenkontaminationen zu beseitigen, die durch das Zerkleinerungsverfahren in das Produkt gelangt sind. Dieses Erzeugnis kann z. B. im Tiegel geschmolzen werden. Aus der Schmelze kann man einen Formkörper abziehen. Das Produkt kann aber auch weiter auf eine noch geringere Korngröße vermahlen und dann in einen Gas- oder Plasmabrenner eingeführt werden, von dem es mit der Flamme auf einen Fangkörper auftrifft, wo sich ein Quarzglaskörper aufbaut.

Es ist ferner ein Verfahren bekannt (IMC-Spruce-Pine, North-Carolina), bei dem Pegmatit des Feldspates wegen mit gewöhnlichen Brech- und Mahlwerkzeugen zu flotationsfähiger Körnung < 300 μm aufbereitet und der im Pegmatit enthaltene Quarz durch kombinierte mechanische und chemische Aufbereitung zu einem Rohmaterial verarbeitet wird, das für gewöhnliche, aber nicht für höherwertige Quarzglasprodukte geeignet ist.

Bei diesem Verfahren wird nämlich das hochreine Rohmaterial sowohl durch Flotationsrückstände als auch durch den Abrieb von den Zerkleinerungswerkzeugen in unerwünschter Weise kontaminiert, so daß es für eine große Zahl von Anwendungen, insbesondere für den Einsatz in der Optik, in der Halbleitertechnik in der Nachrichtentechnik (Lichtleitfasern) und in der Lampenindustrie nicht mehr brauchbar ist.

Die in den vergangenen ca. 10 Jahren stark zunehmende Nachfrage nach Quarzglas für eine wachsende Anzahl von Anwendungsgebieten, wie in der Beleuchtungsindustrie, der Halbleiterindustrie, der Nachrichtentechnik, in Verhüttungsbetrieben, in der Chemie und in der Optik stellt die Rohquarzlieferanten vor kaum lösbare Aufgaben. Es ist abzusehen, daß die Reserven an wasserklarem und transparentem Rohquarz den ständig steigenden Bedarfszahlen der Quarzglaserzeuger in Kürze nicht mehr gewachsen sein werden. Die an sich vorhandenen großen Reserven an keine Transparenz aufweisendem Quarz (Milchquarz) werden bis heute für die Verarbeitung zu Quarzglas nicht ausgenutzt, weil die meisten dieser nicht mehr transparenten Quarze von Natur aus so verunreinigt sind, daß das daraus gewonnene Quarzglas keiner späteren Anwendung mehr zugeführt werden kann.

Aufgabe der Erfindung ist es, ein Verfahren anzugeben, mit dem es möglich ist, aus keine Transparenz mehr aufweisendem Quarz (Milchquarz) ein Produkt zu erzeugen, das als solches handelsfähig ist und vom Quarzglashersteller zur Erzeugung reinen Quarzglases verwendet werden kann, wenn er beim Erschmelzen dieses Produktes bestimmte, durch eine Weiterbildung der Erfindung sich ergebende Verfahrensbedingungen einhält.

Diese Aufgabe wird erfindungsgemäß gelöst durch folgende Verfahrensschritte:

a) der aus der Lagerstätte gewonnene Milchquarz wird in Stücke von einer Größe zerkleinert, in der die Stücke in sich homogen sind;

b) die gewonnenen Stücke werden in einem Säurebad gewaschen und anschließend mit deionisiertem Wasser gespült;

c) die noch im Spülbad befindlichen Stücke werden nach dem Augenschein unter Ausscheiden kontaminierter und/oder verwachsener Stücke nach dem Grad ihrer Transluzenz verlesen und Stücke gleicher Transluzenz zu Gruppen zusammengefaßt;

d) die erhaltenen Gruppen von Stücken gleicher Transluzenz werden getrennt getrocknet oder naß oder nach der Trocknung zu einem Granulat aufgemahlen.

Der verwendete milchige Rohquarz besteht zu 99,8 % aus $SiO_2$. Solcher Rohquarz findet sich beispielsweise in Arkansas/USA und dort insbesondere in der Blocker Lead Mine Nr. 4. Der Kristallwassergehalt dieses milchigen Rohquarzes liegt bei etwa 0,2 %, die Summe der Kontaminationen unter 65 ppm.

Die nachstehende Gegenüberstellung von Analysen eines wasserklaren bis transparenten Quarzes mit einem milchigen Quarz

Chemische Analyse

|  | Transp. | Milchquarz |
| --- | --- | --- |
| Al | 15 | 15 in ppm |
| Fe | 3 | 3 |
| Ca | 1 | 1 |
| Mg | 1 | 1 |
| Na | 2 | 15-20 |
| K | 2 | 7 |
| Li | 1 | 1 |
| Ti | 1 | 1 |
| (weitere) | kl 10 | kl 20 |
| LOI (%) | kl 0,001 | kl 0,2 |

(Analysen: neuester Stand mit AAS (ICP 5500 von Perkin Elmer) gemessen)

zeigt, daß neben dem beträchtlich höheren OH-Gehalt insbesondere der Na- und der K-Gehalt des milchigen Quarzes von den entsprechenden Werten transparenter Quarze erheblich nach oben abweicht. Der Na-Gehalt liegt um einen Faktor ca. 10 und der K-Gehalt um einen solchen ca. 3 bis 5 höher.

Im wesentlichen sind es diese erhöhten Gehalte an Na und K, die dem nicht mehr transparenten Quarz sein milchiges Aussehen verleihen und ihn damit für die konventionelle Verarbeitung zu Quarzglas ungeeignet machen.

Das nach der Erfindung gewonnene Produkt läßt sich zur Erzeugung eines Formkörpers nach einem Verfahren verwenden, bei dem in üblicher Weise Quarz in einem Tiegel aus hochschmelzendem Metall oder Graphit unter Unterdruck bei einer Temperatursteigerung von 8 bis 10 °C/Minute bis auf eine Temperatur oberhalb 1735°C geschmolzen und nach einer Verweilzeit von 10 bis 30 Minuten aus dem Tiegel, gegebenenfalls nach vorheriger Druckerhöhung zum Formkörper abgezogen wird, wenn in Weiterbildung der Erfindung der erfindungsgemäße Quarz vor dem Einfüllen in den Tiegeln in einem Säurebad gereinigt, anschließend mit deionisiertem Wasser gespült und dann getrocknet wird, worauf das derart behandelte Produkt durch Erhitzen im entgasten Tiegel bei einer Temperatur von mehr als 1850°C unter hohem Vakuum geschmolzen wird.

Das Säurebad besteht dabei vorzugsweise aus Flußsäure.

Das Erschmelzen unter einem hohen Vakuum, wie es vorstehend als wesentlich genannt wird, erfolgt dabei vorteilhaft bei einem Vakuum von $10^{-2}$ Torr ($1,33 \cdot 10^{-2}$ mbar).

Je nach dem Grad der milchigen Eintrübung des nach dem erfindungsgemäßen Verfahren gewonnenen Produktes kann es erforderlich sein, daß beim Erhitzen dieses Produktes eine Halteperiode von 10 bis 30 Minuten bei einer Temperatur des Gutes von etwas über 600°C eingeschaltet wird, wobei die geringere Verweilzeit für einen Quarz mit geringerer Trübung, die höhere Verweilzeit für einen Quarz mit höherer Trübung gilt.

Bei besonders trüben Ausgangsprodukten kann es zweckmäßig sein in Weiterbildung der Erfindung eine zweite Halteperiode von bis zu 30 Minuten bei einer Temperatur des Gutes von etwas über 1050°C einzuschalten. Mit diesen Maßnahmen werden dann praktisch sämtliche noch in dem milchigen Quarz verbliebenen Verunreinigungen insbesondere an Na und K entweder unmittelbar ausgetrieben oder wenigstens soweit aus dem Verband des Quarzkristalles gelöst, daß bei der nachfolgenden Erhitzung eine vollständige Ausscheidung erfolgt.

Besonders zweckmäßig kann es sein, um diesen Reinigungsvorgang zu unterstützen, vor dem Abziehen des Formkörpers aus dem Tiegel die Schmelze zwischen 30 und 10 Minuten auf einer Temperatur zwischen 1800°C und 1850°C zu halten.

Das Ergebnis des erfindungsgemäßen Verfahrens ist ein Quarzglas, das sich nicht mehr von einem Quarzglas unterscheidet, das aus einem völlig wasserklaren Ausgangsquarz hergestellt worden ist.

Auch das aufgemahlene Endprodukt läßt sich bei der Erzeugung eines Formkörpers aus reinem Quarzglas verwenden, bei dem gemahlener Quarz in einem Gas- oder Plasmabrenner geschmolzen und die den geschmolzenen Quarz enthaltende Flamme auf einen Fangkörper gerichtet wird, auf dem sich der Quarzglasformkörper aufbaut, wenn man von dem erfindungsgemäß hergestellten Granulat ausgeht, dieses auf eine Korngröße von 90 μm bis 300 μm weiter zerkleinert, das so erhaltene zerkleinerte Granulat für ca. 30 bis 20 Minuten auf ca. 1050 bis ca. 1300°C in einer Sauerstoff- und/oder Chloratmosphäre erhitzt, dann wieder auf Raumtemperatur abkühlt und schließlich in den Vorratsbehälter des Brenners abfüllt, von wo aus dieses Granulat in den Brenner selbst eingeführt wird.

Mit der vorgeschlagenen Wärmebehandlung von 30 bis 20 Minuten bei ca. 1050 bis ca. 1300°C unter einer Sauerstoff und/oder Chloratmosphäre werden nicht nur das Kristallwasser und eventuelle Gaseinschlüsse sicher ausgetrieben, sondern auch die Alkaligehalte, insbesondere die Natrium- und Kaliumgehalte reduziert, die beim Ausgangsmaterial für das erfindungsgemäße Produkt bis zum Zehn- und Fünfzehnfachen dessen vorliegen können, das im wasserklaren Quarz vorhanden ist.

Der Abbrand des aufgemahlenen Produktes im Gas- oder Plasmabrenner erfolgt in üblicher Weise, so daß darauf nicht näher eingegangen zu werden braucht.

**Patentansprüche**

1. Verfahren zur Herstellung eines zur Erzeugung reinen Quarzglases geeigneten Produkten aus natürlichem, keine Transparenz aufweisenden Quarz (Milchquarz), gekennzeichnet durch die folgenden Verfahrensschritte:

a) der aus der Lagerstätte gewonnene Milchquarz wird in Stücke von einer Größe zerkleinert, in der die Stücke in sich homogen sind;

b) die gewonnenen Stücke werden in einem Säurebad gewaschen und anschließend mit weichem oder entsalztem oder deionisiertem Wasser gespült;

c) die noch im Spülbad befindlichen Stücke werden nach dem Augenschein unter Ausscheiden kontaminierter und/oder verwachsener Stücke nach dem Grad ihrer Transluzenz verlesen und Stücke gleicher Transluzenz zu Gruppen zusammengefaßt;

d) die erhaltenen Gruppen von Stücken gleicher Transluzenz werden getrennt getrocknet oder naß oder nach der Trocknung zu einem Granulat aufgemahlen.

2. Verfahren zur Erzeugung eines Formkörpers aus reinem Quarzglas, bei dem Quarz in einem Tiegel aus hochschmelzendem Metall oder Graphit unter Unterdruck bei einer Temperatursteigerung von 8 bis 10°C pro Minute bis zu einer Temperatur oberhalb 1735°C geschmolzen und nach einer Verweilzeit von 10 bis 30 Minuten aus dem Tiegel, gegebenenfalls nach vorheriger Druckerhöhung, zum Formkörper abgezogen wird, dadurch gekennzeichnet , daß unter Verwendung eines nach den Verfahren nach Anspruch 1 hergestellten stückigen Produktes dieses Produkt vor dem Einfüllen in den Tiegel in einem Säurebad gereinigt, anschließend mit deionisiertem Wasser gespült und dann getrocknet wird, worauf das derart behandelte Produkt in dem durch Erhitzen entgasten Tiegel bei einer Temperatur von mehr als 1850°C unter hohem Vakuum geschmolzen wird.

3. Verfahren nach Anspruch 2, dadurch gekennzeichnet, daß beim Erhitzen des Produktes eine Halteperiode von 10 bis 30 Minuten bei einer Temperatur des Gutes von etwas über 600°C eingeschaltet wird.

4. Verfahren nach Anspruch 3, dadurch gekennzeichnet, daß beim Erhitzen des Produktes eine zweite Halteperiode von bis zu 30 Minuten bei einer Temperatur des Gutes von etwas über 1050°C eingeschaltet wird.

5. Verfahren nach einem oder mehreren der Ansprüche 2 bis 4, dadurch gekennzeichnet, daß vor dem Abziehen des Formkörpers aus dem Tiegel die Schmelze zwischen 30 und 10 Minuten auf einer Temperatur zwischen 1800°C und 1850°C gehalten wird.

6. Verfahren zur Erzeugung eines Formkörpers aus reinem Quarzglas, bei dem granulierter Quarz in einem Gas- oder Plasmabrenner geschmolzen und die den geschmolzenen Quarz enthaltende Flamme auf einen Fangkörper gerichtet wird, auf dem sich der Quarzglasformkörper aufbaut, dadurch gekennzeichnet, daß unter Verwendung eines nach dem Verfahren nach Anspruch 1 hergestellten Granulats dieses Granulat auf eine Korngröße von 300 µm bis 90 µm zerkleinert, das erhaltene zerkleinerte Granulat für ca. 30 bis 20 Minuten auf 1050 bis ca. 1300°C in einer Sauerstoff- und/oder Chloratmosphäre erhitzt, dann wieder auf Raumtemperatur abgekühlt und schließlich in den Vorrats behälter des Brenners abgefüllt wird.

7. Verwendung des nach dem Verfahren nach Anspruch 1 erhaltenen Produktes als Ausgangsmaterial für die Züchtung von Piezokristallen im Autoklaven.

**Claims**

1. A method for producing a product suitable for producing pure quartz glass, from natural quartz not having any transparency (milk quartz), characterized by the following method steps:

a) the milk quartz obtained from the deposit is crushed into pieces of a size in which the pieces are homogeneous;

b) the obtained pieces are washed in an acid bath and then rinsed with soft or demineralized or deionized water;

c) the pieces while still in the rinsing bath are sorted by their appearance according to the degree of translucency, contaminated and/ or intergrown pieces being eliminated, and pieces having the same translucency are grouped;

d) the obtained groups of pieces having the same translucency are ground into granulates separately dried or wet or after drying.

2. A method for producing a shaped body from pure quartz glass, in which quartz is melted in a crucible of high-melting metal or graphite in a partial vacuum at a temperature increase of 8 to 10°C, per minute up to a temperature higher than 1735°C, and removed from the crucible to form the shaped body after a sojourn time of 10 to 30 minutes, optionally after a previous pressure increase, characterized in that, using a lumpy product produced by the method according to claim 1, this product is cleaned in an acid bath before being poured into the crucible, then rinsed with deionized water and dried, whereupon the product thus treated is melted at a temperature higher than 1850°C in a high vacuum in the crucible outgassed by heating.

3. A method according to claim 2, characterized in that when the product is heated a holding period of 10 to 30 minutes is provided at a temperature of the material of somewhat more than 600°C.

4. A method according to claim 3, <u>characterized</u> in that when the product is heated a second holding period of up to 30 minutes is provided at a temperature of the material of somewhat more than 1050°C.

5. A method according to one or more of claims 2 to 4, <u>characterized</u> in that before removing the shaped body from the crucible the melt is held between 30 and 10 minutes at a temperature between 1800°C and 1850°C.

6. A method for producing a shaped body from pure quartz glass, in which granulated quartz is melted in a gas or plasma torch and the flame containing the melted quartz is directed toward a collecting body on which the quartz glass shaped body builds up, <u>characterized</u> in that, using granulates produced by the method according to claim 1, these granulates are crushed to a grain size of 300 μm to 90 μm, the obtained crushed granulates are heated for about 30 to 20 minutes to between 1050 and about 1300°C in an oxygen and/or chlorine atmosphere, then cooled down to room temperature and finally poured into the supply vessel of the torch.

7. The use of the product obtained by the method according to claim 1 as the starting material for growing piezocrystals in an autoclave.


**Revendications**

1. Procédé de fabrication d'un produit convenant à la préparation de verre de quartz pur à partir de quartz naturel (quartz laiteux) ne présentant pas de transparence, caractérisé en ce qu'il comporte les opérations suivantes :

a) le quartz laiteux provenant du gisement est concassé en morceaux d'une grandeur telle que les morceaux sont par eux-mêmes homogènes;

b) les morceaux obtenus sont lavés dans un bain d'acide, puis rincés avec de l'eau douce, dessalée ou dé-ionisée ;

c) les morceaux qui se trouvent encore dans le bain de rinçage sont triés à vue pour séparer les morceaux contaminés et/ou accrus d'après leur degré de translucidité, les morceaux ayant la même translucidité étant rassemblés en groupes;

d) les groupes de même translucidité sont soumis à un séchage séparé ou à un broyage à l'état humide ou après séchage pour obtenir un granulat.

2. Procédé de fabrication d'un corps moulé en verre de quartz pur, dans lequel le quartz est fondu dans un creuset en métal à haut point de fusion ou en graphite en étant soumis à une dépression et à une élévation de température de 8 à 10°C par minute jusqu'à une température supérieure à 1735°C et, après maintien pendant 10 à 30 minutes, il est extrait du creuset, le cas échéant après une augmentation préalable de la pression, pour donner le corps moulé, caractérisé en ce qu'un produit en morceaux obtenu par le procédé décrit par la revendication 1 est, avant son introduction dans le creuset, nettoyé dans un bain d'acide, puis rincé avec de l'eau dé-ionisée, puis séché, après quoi le produit ainsi traité est fondu sous un vide poussé dans le creuset débarrassé de gaz par un chauffage à une température de plus de 1850°C.

3. Procédé selon la revendication 2, caractérisé en ce que le chauffage du produit comprend une période de maintien de 10 à 30 minutes pendant laquelle la température du produit est légèrement supérieure à 600°C.

4. Procédé selon la revendication 3, caractérise en ce que le chauffage du produit comprend une deuxième période de maintien pouvant atteindre 30 minutes pendant laquelle la température du produit est légèrement supérieure à 1050°C.

5. Procédé selon l'une des revendications 2 à 4, caractérisé en ce qu'avant l'extraction du corps moulé hors du creuset, le produit fondu est maintenu pendant une durée de 30 à 10 minutes à une température comprise entre 1800°C et 1850°C.

6. Procédé de fabrication d'un corps moulé en verre de quartz pur dans lequel le quartz granulé est fondu dans un brûleur à gaz ou à plasma et dans lequel la flamme qui contient le quartz fondu est dirigée sur un corps de réception sur lequel se forme le corps moulé en verre de quartz, caractérisé en ce qu'un granulat fabriqué suivant le procédé décrit par la revendication 1, est broyé jusqu'à une granulométrie de 300 μm à 90 μm, en ce que le granulat obtenu est chauffé pendant 30 à 20 minutes environ à une température de 1050 à 1300°C environ dans une atmosphère d'oxygène et/ou de chlore, puis refroidi à la temperature ambiante et, enfin, versé dans le reservoir du brûleur.

7. Utilisation du produit obtenu par le procédé selon la revendication 1 comme matériau de départ pour l'accroissement en autoclave de piézo-cristaux.